# EUROPÄISCHE PATENTANMELDUNG

(11) **EP 2 907 370 A1**
(43) Veröffentlichungstag der Anmeldung: **19.08.2015**
(21) Anmeldenummer: 15401009.4
(22) Anmeldetag: 17.02.2015
(51) Int. Cl.: A01B 69/00, A01B 69/04

(54) **VERFAHREN ZUR UNTERSTÜTZUNG DER POSITIONIERUNG EINER LANDWIRTSCHAFTLICHEN ARBEITSMASCHINE**

(30) Priorität: 18.02.2014 DE 102014102036
(71) Anmelder: Amazonen-Werke H. Dreyer GmbH & Co. KG, 49205 Hasbergen (DE)
(72) Erfinder:

(57) **Zusammenfassung**

Verfahren zum automatischen Anlegen von Leitlinien auf einem Feld für eine landwirtschaftliche Arbeitsmaschine, dadurch gekennzeichnet, dass basierend auf einer vorgegebenen Feldrandkontur eine zu der Feldrandkontur im Wesentlichen parallele Leitlinie, basierend auf wenigstens einem Parameter, erstellt wird und eine Steuereinheit für eine landwirtschaftliche Arbeitsmaschine.

## Beschreibung

Die vorliegende Erfindung betrifft ein Verfahren und eine Steuereinheit zur Unterstützung der Positionierung einer landwirtschaftlichen Maschine auf einem zu bearbeitenden Feld.

Beim Bearbeiten von Feldern in der Landwirtschaft fährt der Fahrer die Arbeitsmaschine üblicherweise in parallelen Fahrgassen über ein Feld. Wenn die Fahrgassen bereits angelegt und gut sichtbar sind, ist das kein Problem, wenn aber zum Beispiel nach dem Umpflügen eines Feldes oder auf einer Wiese für den nächsten Bearbeitungsgang neue Fahrgassen angelegt werden müssen oder auch wenn bereits Fahrgassen vorhanden, aber nur schwer zu erkennen sind, kann das richtige Lenken der Arbeitsmaschine schwierig sein. Man hat daher schon Fahrhilfssysteme entwickelt, die dem Fahrer am Bordcomputer eine Fahrhilfe in Form von parallel verlaufenden Linien oder Streifen anzeigt. Anhand der Position der angezeigten Arbeitsmaschine und dieser Fahrhilfsinformationen, die z.B. auch die notwendigen Richtungskorrekturen in Form von Pfeilen anzeigen können, kann der Fahrer auch bei schwer zu erkennenden Fahrgassen die Arbeitsmaschine positionsrichtig über das Feld fahren.

Bei bekannten Systemen werden die Fahrhilfsinformationen vom Bordcomputer errechnet, indem dieser der Arbeitsbreite der Arbeitsmaschine entsprechende, parallele Streifen erzeugt und diese zusammen mit der jeweiligen Position der Arbeitsmaschine auf dem Feld am Bildschirm des Bordcomputers anzeigt. Weitergehende Hilfen, insbesondere wenn an nicht geraden Rändern eines Feldes gearbeitet werden soll, gibt es nicht.

Es ist ausgehend vom Stand der Technik die Aufgabe der vorliegenden Erfindung, ein Verfahren und eine Steuereinheit für eine landwirtschaftliche Arbeitsmaschine bereitzustellen, die eine verbesserte Unterstützung der Positionierung der Arbeitsmaschine ermöglichen.

Diese Aufgabe wird erfindungsgemäß durch das Verfahren nach Anspruch 1 und die Steuereinheit für eine landwirtschaftliche Arbeitsmaschine nach Anspruch 9 gelöst. Vorteilhafte Weiterbildungen der Erfindung sind in den Unteransprüchen erfasst.

Das erfindungsgemäße Verfahren ist dadurch gekennzeichnet, dass basierend auf einer vorgegebenen Feldrandkontur eine zu der Feldrandkontur im Wesentlichen parallele Leitlinie, basierend auf wenigstens einem Parameter, z.B. der Arbeitsbreite der Arbeitsmaschine, erstellt wird. Dabei bedeutet "im Wesentlichen parallel", dass die Leitlinie bis auf geringe Abweichungen parallel zur Feldrandkontur verläuft, wobei diese Abweichungen aufgrund von Hindernissen in bestimmten Bereichen auch größer sein können. Der grundsätzliche Verlauf der Leitlinie soll jedoch entlang der Feldrandkontur verlaufen. Das automatische Erstellen der Leitlinie basierend auf der Feldumgrenzung mit der Anzeigeeinrichtung ermöglicht eine zuverlässige Führung der Arbeitsmaschine, selbst wenn dieser zuvor das Feld noch nie umfahren hat.

In einer Ausführungsform ist das Verfahren dadurch gekennzeichnet, dass der Parameter auf einer Arbeitsbreite eines Arbeitsgeräts der landwirtschaftlichen Arbeitsmaschine basiert und/oder der halben Arbeitsbreite des Arbeitsgeräts entspricht. Durch diese Wahl des Parameters kann die Leitlinie basierend auf der Feldrandkontur so erstellt werden, dass der optimale Arbeitsweg der landwirtschaftlichen Arbeitsmaschine für eine bestimmte Arbeitsbreite angezeigt werden kann.

In einer Weiterbildung der Erfindung wird die Feldrandkontur manuell vorgegeben und/oder basierend auf GPS-Daten erstellt. Diese Ausführungen gestatten zum einen eine sehr genaue Verlaufsbestimmung der Feldrandkontur.

Es kann auch vorgesehen sein, dass weitere Leitlinien automatisch, basierend auf der Leitlinie erstellt werden, wobei die weiteren Leitlinien zumindest teilweise parallel zur Leitlinie verlaufen. Dabei verlaufen die Leitlinien dann teilweise parallel zur Leitlinie, wenn sie in zumindest einem Abschnitt parallel zum angrenzenden Abschnitt der Leitlinie verlaufen. Mit dieser Ausführungsform kann ein Teil oder der gesamte Arbeitsweg der landwirtschaftlichen Arbeitsmaschine im Vorfeld geplant werden und zusätzliche Fahrten können so vermieden werden.

In einer Ausführungsform des Verfahrens wird die Leitlinie basierend auf der Bewegung der landwirtschaftlichen Arbeitsmaschine entlang der Leitlinie aktualisiert. So kann die zunächst automatisch bestimmte Leitlinie unter Berücksichtigung des tatsächlichen Fahrwegs des Bauern, der hier beispielsweise bestimmten Hindernissen ausweichen muss, aktualisiert und an die tatsächlichen Umstände angepasst werden.

In einer weiteren Ausführungsform ist das Verfahren dadurch gekennzeichnet, dass die Leitlinie basierend auf für das Feld charakteristischen geographischen Informationen erstellt wird. Sind weitere geografische Informationen bekannt, wie beispielsweise Übergänge des Feldes auf eine Straße oder Unwegsamkeiten wie große Felsbrocken, kann die Leitlinie unter Berücksichtigung dieser zusätzlichen Informationen und basierend auf der Feldkontur erstellt werden, wodurch spätere Korrekturen vermieden werden können.

Weiterhin kann vorgesehen sein, dass die weiteren Leitlinien basierend auf für das Feld charakteristischen geographischen Informationen basierend aufeinander und basierend auf der Leitlinie erstellt werden. Mit dieser Ausführung können auch die weiteren Leitlinien basierend auf zusätzlichen geografischen Informationen, die ihren Verlauf beeinflussen können, erstellt werden, was auch hier weitere Korrekturen überflüssig macht bzw. reduzieren kann.

In einer Ausführungsform ist vorgesehen, dass basierend auf der Leitlinie und der aktuellen Position der Arbeitsmaschine eine Fahrhilfe in einer Ausgabeeinrichtung angezeigt wird oder basierend auf der Leitlinie eine automatische Lenkung der Arbeitsmaschine durchgeführt wird. Die Fahrhilfe wird dabei vorzugsweise graphisch dargestellt, wobei eine Darstellung der aktuellen Position der Arbeitsmaschine und deren Arbeitsbreite in Relation zu den Leitlinien erfolgen kann und eine Anzeige vorgesehen ist, die notwendige Richtungskorrekturen für den Fahrer erkennbar darstellt.

Erfindungsgemäß wird eine Steuereinheit für eine landwirtschaftliche Arbeitsmaschine bereitgestellt, die dadurch gekennzeichnet ist, dass sie basierend auf einer vorgegebenen Feldrandkontur eine zu der Feldrandkontur im Wesentlichen parallele Leitlinie, basierend auf wenigstens einem Parameter, z.B. der Arbeitsbreite der Arbeitsmaschine, erstellen kann. Diese Steuereinheit gestattet eine zuverlässigere Planung bzw. Erstellung von Leitlinien, insbesondere auch für das Anlegen der sogenannten Vorgewendeflächen.

Die Steuereinheit kann in einer Ausführungsform dadurch gekennzeichnet sein, dass der Parameter auf der Arbeitsbreite eines Arbeitsgeräts der landwirtschaftlichen Arbeitsmaschine basiert und/oder der halben Arbeitsbreite des Arbeitsgeräts entspricht. Unter Berücksichtigung der Abmessungen des Arbeitsgeräts der landwirtschaftlichen Arbeitsmaschine kann die Steuereinheit bereits im Vorfeld eine für den Arbeitsweg der Arbeitsmaschine geeignete Leitlinie erstellen.

Es kann auch vorgesehen sein, dass der Steuereinheit die Feldkontur manuell vorgegeben werden kann oder basierend auf gespeicherten GPS-Daten erstellt werden kann. Die Steuereinheit kann so sowohl einerseits auf geografische Daten mit hoher Genauigkeit zurückgreifen als auch andererseits das persönliche Wissen des Benutzers berücksichtigen, der die aktuellen Gegebenheiten des Feldes gut kennt und eventuelle Unwegsamkeiten berücksichtigen kann.

In einer Weiterbildung der Steuereinheit kann die Steuereinheit weitere Leitlinien automatisch, basierend auf der Leitlinie erstellen, wobei die weiteren Leitlinien zumindest teilweise parallel zur Leitlinie verlaufen. Auf diese Weise kann der komplette Arbeitsweg für die landwirtschaftliche Arbeitsmaschine basierend auf der Feldkontur und der ersten erstellten Leitlinie erstellt werden.

Ferner kann vorgesehen sein, dass die Steuereinheit die Leitlinie basierend auf gespeicherten geographischen Informationen, die charakteristisch für das Feld sind, erstellen kann. Diese Informationen können über die bloßen Positionsangaben der Feldkonturen hinausgehen und erlauben der Steuereinheit somit, dem Fahrer eine Fahrhilfe anzuzeigen, die kaum Korrekturen benötigt.

In einer Ausführungsform der Erfindung ist vorgesehen, dass die Steuereinheit die Leitlinie basierend auf von einem Positionssensor aufgenommenen Positionsdaten der landwirtschaftlichen Arbeitsmaschine bei einer Bewegung entlang der Leitlinie aktualisieren kann. Diese Ausführungsform erlaubt bereits bei der ersten Fahrt die Korrektur der erstellten Leitlinien unter Berücksichtigung des tatsächlichen Arbeitswegs der landwirtschaftlichen Arbeitsmaschine und erlaubt somit eine Optimierung der Fahrhilfe.

Weiterhin kann die Steuereinheit dadurch gekennzeichnet sein, dass der eine Parameter von der Steuereinheit basierend auf gespeicherten Daten vorgegeben werden kann und/oder der Parameter manuell eingegeben werden kann. So kann beispielsweise vorgesehen sein, dass die Leitlinien anhand eines benötigten Wendekreisradius der landwirtschaftlichen Arbeitsmaschine oder der Breite des Gestänges bzw. der Arbeitsbreite erstellt werden, aber es können auch durch den Benutzer eingegebene spezifischere Informationen verwendet werden.
- Fig. 1: Schematische Darstellung eines Feldes und einer Leitlinie,
- Fig. 2: Schematische Darstellung des Feldes mit erster Leitlinie und weiteren Leitlinien,
- Fig. 3: Schematische Darstellung einer Anzeige- und Eingabeeinheit und
- Fig. 4a+b: Schematische Darstellung einer Aktualisierung oder Anpassung einer Leitlinie.

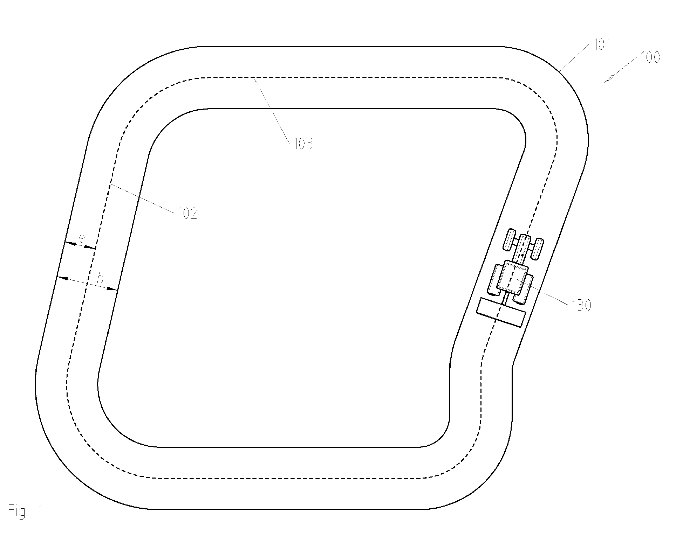

Fig. 1 zeigt eine Darstellung eines Feldes 100, wie sie mit Hilfe einer Ausgabeeinrichtung gemäß der Erfindung erfolgen kann. Auf dem Feld 100 ist zunächst eine Feldrandkontur 101 dargestellt, die die äußere Umrandung des Feldes angibt. Diese Begrenzung kann der für die landwirtschaftliche Arbeitsmaschine vorgesehenen Steuereinheit entweder aus einem internen Speicher zur Verfügung gestellt werden oder anders eingegeben werden. Beispielsweise kann die Feldrandkontur 101 auch durch eine Fahrt entlang des Feldes bestimmt werden.

Basierend auf der Feldkontur 101 und wenigstens einem weiteren Parameter ist vorgesehen, dass mit Hilfe des erfindungsgemäßen Verfahrens eine Leitlinie 102 automatisch erstellt wird und gemäß einer Ausführungsform in einer entsprechenden Ausgabeeinrichtung in der landwirtschaftlichen Arbeitsmaschine angezeigt wird, um dem Fahrer dieser Arbeitsmaschine eine Fahrhilfe zur Verfügung zu stellen. Die Leitlinie 102 markiert dabei vorzugsweise den Weg, den die landwirtschaftliche Arbeitsmaschine befahren sollte. Es kann vorgesehen sein, dass diese Leitlinie 102 in der Mitte eines ausgedehnten Leitstreifens 103 dargestellt wird, z.B. um einen umlaufenden Vorgewendestreifen zu erzeugen. Der oder die Parameter können entweder bereits in der Steuereinheit gespeichert sein oder manuell eingegeben werden. Ebenso kann vorgesehen sein, dass ein zwar in der Steuereinheit gespeicherter Parameter genutzt wird, dieser aber durch eine manuelle Eingabe manipuliert oder geändert werden kann.

Dieser Leitstreifen kann die Arbeitsbreite eines Arbeitsgeräts der landwirtschaftlichen Arbeitsmaschine, beispielsweise eines Pfluges, darstellen. In einer solchen Ausführungsform ist vorgesehen, dass wenigstens einer der Parameter, auf dem die Leitlinie basiert, entweder von der Arbeitsbreite des Arbeitsgeräts der landwirtschaftlichen Arbeitsmaschine abhängt oder dieser entspricht. So kann gemäß einer Ausführungsform vorgesehen sein, dass die Leitlinie in einem Abstand e, der der halben Arbeitsbreite des Arbeitsgeräts entspricht, parallel zur Feldrandkontur 101 verläuft. Die gesamte Breite b des Leitstreifens entspricht dann der vollen Arbeitsbreite der landwirtschaftlichen Arbeitsmaschine bzw. des Arbeitsgeräts.

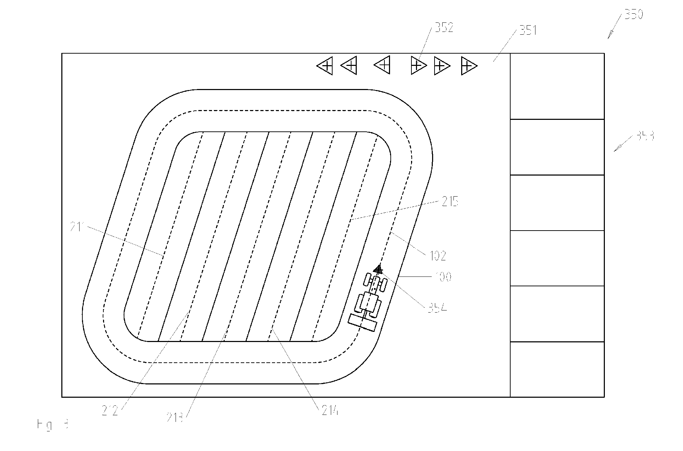

Es ist somit möglich, eine Leitlinie automatisch zu erstellen. Die über einen GPS-Sensor gemessene Position der Arbeitsmaschine 130 kann auf einer Ausgabeeinrichtung ebenfalls angezeigt werden, gegebenenfalls gemeinsam mit einer Fahrhilfe, die notwendige Richtungskorrekturen beispielsweise mit Hilfe von Pfeilen in der Anzeigeeinrichtung darstellt, wie dies genauer in Fig. 3 beschrieben wird. Es kann ferner vorgesehen sein, dass anstelle oder zusätzlich zu der Fahrhilfe in Form von Pfeilen eine automatische Lenkung der Arbeitsmaschine durch die Steuereinheit ermöglicht wird. Dazu wird die erstellte Leitlinie 102 und ggf. weitere Leitlinien genutzt, um basierend darauf und basierend auf der aktuellen Position der Arbeitsmaschine automatisch Richtungskorrekturen durchzuführen.

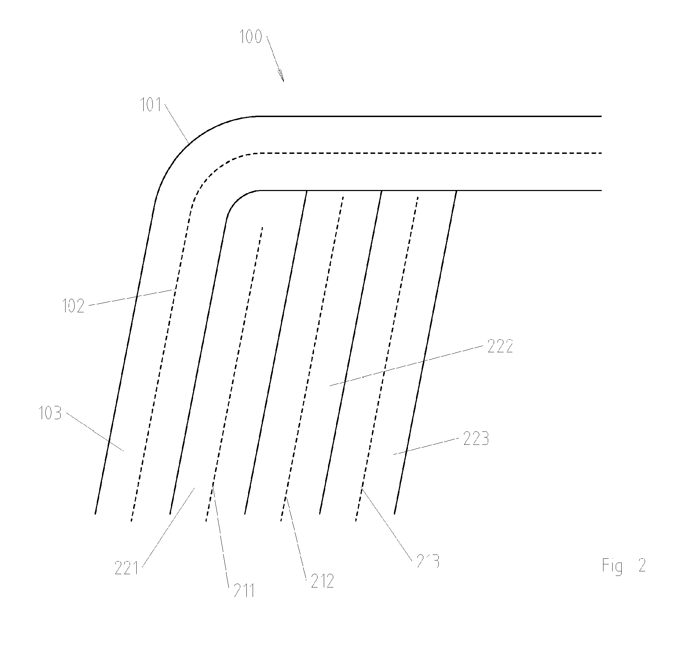

Fig. 2 zeigt eine weitere Ausführungsform des Verfahrens, bei dem zusätzlich zur Leitlinie 102 weitere Leitlinien 211-213 automatisch erstellt werden. Da bereits eine Leitlinie 102 mit dem eventuell zugehörigen Leitstreifen 103 erstellt wurde, können mit Hilfe des vorgesehenen Verfahrens weitere Leitlinien 211-213 und entsprechende Leitstreifen 221-223 erstellt werden, die zumindest teilweise parallel zur Leitlinie 102 verlaufen können. Dabei können diese Leitlinien 211-213 beliebig fortgesetzt werden, um das gesamte Feld virtuell mit Leitlinien zu bedecken und mit Hilfe einer entsprechenden Ausgabeeinrichtung diese Leitlinien als Fahrhilfe anzuzeigen.

Es kann ferner vorgesehen sein, dass diese Leitlinien nicht nur auf der Leitlinie 102 basieren sondern auch aufeinander basieren, insbesondere dann, wenn eine der Leitlinien 211-213 nicht parallel zu der Leitlinie 102 verlaufen kann, weil es ein bekanntes Hindernis, wie beispielsweise einen Brunnen, einen Fels oder Ähnliches in dem Bereich des Feldes gibt, in dem die Leitlinie verlaufen müsste, um parallel zur Leitlinie zu verlaufen. In dem erfindungsgemäßen Verfahren kann vorgesehen sein, dass ein solches Hindernis von der Steuereinheit erkannt wird und bei dem Berechnen der weiteren Leitlinien 211-213 berücksichtigt wird, so dass dieses Hindernis umfahren werden kann und sämtliche folgenden Leitlinien entsprechend angepasst werden. Dabei kann auch die Breite des Leitstreifens berücksichtigt werden, so dass eine Bearbeitung des Feldes um das Hindernis herum durchgeführt werden kann.

In diesem Zusammenhang ist es auch vorteilhaft, wenn die Steuereinheit mit einer Eingabeeinrichtung verbunden ist, die beispielsweise mit der Anzeigeeinrichtung verbunden sein kann oder mit dieser identisch ist (beispielsweise Ausführung als Bordcomputer mit Touchpad). Über die Eingabeeinrichtung kann dann der Fahrer entweder während des Betriebs oder bereits vor dem Betrieb, z.B. vor Erstellen der Leitlinien, weitere geografische Informationen oder sonstige Informationen eingeben, die von der Steuereinheit berücksichtigt werden können, um die Leitlinie und alle weiteren Leitlinien zu bestimmen. Dazu zählen nicht nur geografische Besonderheiten, die für das Feld charakteristisch sind, beispielsweise Hindernisse, die umfahren werden müssen, sondern auch zusätzliche Parameter, die über die Arbeitsbreite hinausgehen. So kann der Fahrer oder ein entsprechender Benutzer zusätzliche Informationen über die landwirtschaftliche Arbeitsmaschine eingeben.

Während bestimmte technische Daten der landwirtschaftlichen Arbeitsmaschine in der Steuereinheit voreingestellt sein können, ist es vorteilhaft, wenn zusätzliche Daten eingegeben werden können. So kann in der Steuereinheit beispielsweise abgespeichert sein, wie groß der Wendekreis der landwirtschaftlichen Arbeitsmaschine ist. Abweichend davon kann ein Benutzer der landwirtschaftlichen Arbeitsmaschine es jedoch für vorteilhaft erachten, wenn er einen größeren Wendekreis zur Verfügung hat. Ein entsprechend geänderter Parameter kann in die Steuereinheit über eine Eingabeeinrichtung eingegeben werden und diese kann bei der Berechnung der Leitlinien diese Besonderheiten berücksichtigen.

Fig. 3 zeigt eine entsprechende Anzeigeeinrichtung 350, die mit der Steuereinheit der landwirtschaftlichen Arbeitsmaschine verbunden sein kann und auf der eine Fahrhilfe, basierend auf den erstellten Leitlinien, angezeigt werden kann. Dazu umfasst die Anzeigevorrichtung einen Anzeigebereich 351, in dem vorzugsweise das Feld 100 zusammen mit einer schematischen Darstellung der landwirtschaftlichen Arbeitsmaschine 354 angezeigt wird. Dabei wird die Arbeitsmaschine vorzugsweise so dargestellt, dass der Fahrer ihre Position in Relation zu den Leitlinien erkennen kann. Es ist vorteilhaft wenn auch eine graphische Darstellung der Arbeitsbreite der Arbeitsmaschine erfolgt, sodass der Fahrer sehen kann, ob sich das verwendete Gestänge in den beispielsweise in Fig. 2 beschriebenen Leitstreifen bewegt.

Zusätzlich kann eine Fahrhilfe 352 angezeigt werden, die basierend auf der aktuellen Position der landwirtschaftlichen Arbeitsmaschine relativ zu den auf der Anzeigeeinrichtung angezeigten Leitlinien 102 und 211-215 Lenkungskorrekturen vorschlägt. Alternativ dazu, oder zusätzlich kann vorgesehen sein, dass die notwendigen Lenkungskorrekturen teilweise automatisch oder vollautomatisch erfolgen, beispielsweise indem die erstellte Leitlinie 102 und ggf. die weiteren Leitlinien 211-215 von der Steuereinheit in Verbindung mit der aktuellen Position der Arbeitsmaschine genutzt werden, um die Lenkungskorrekturen zu berechnen und eine entsprechende Korrektur der Lenkung vorzunehmen.

Zusätzlich zu dem Anzeigebereich 351 kann ein interaktiver Bereich 353 entweder integriert in die Anzeigeeinrichtung 350 (beispielsweise mittels eines Touchpads) oder separat davon vorgesehen sein, der eine Interaktion mit der Steuereinheit ermöglicht. So kann dieser interaktive Bereich 353 mehrere Tasten umfassen, um beispielsweise zusätzliche Parameter einzugeben oder eine manuelle Änderung der Leitlinien in bestimmten Bereichen zu ermöglichen. Ebenso kann vorgesehen sein, dass über diesen interaktiven Bereich 353 die Führung der landwirtschaftlichen Arbeitsmaschine entlang der Leitlinie mit Hilfe der Fahrhilfe im Anzeigebereich 351 begonnen oder gestoppt werden kann.

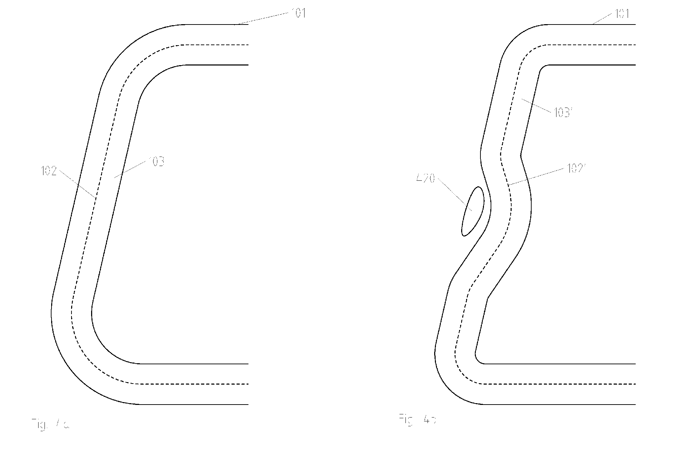

Fig. 4a und 4b zeigen eine weitere Ausführungsform des erfindungsgemäßen Verfahrens, bei dem eine Änderung der zunächst erstellten Leitlinie 102 basierend auf der Feldkontur 101 und wenigstens einem weiteren Parameter erfolgt. In Fig. 4a wurde die Leitlinie 102 basierend auf der Feldkontur 101 erstellt, wobei wenigstens als zusätzlicher Parameter die Arbeitsbreite des Arbeitsgeräts der landwirtschaftlichen Arbeitsmaschine berücksichtigt wurde, so dass ein Leitstreifen 103 erstellt wurde, in dessen Mitte die Leitlinie 102 verläuft. Dieser mittige Verlauf der Leitlinie 102 im Leitstreifen 103 ist natürlich nicht zwingend, sondern hängt von dem Arbeitsgerät ab. Ist das Arbeitsgerät asymmetrisch ausgebildet, also erstreckt sich das Arbeitsgerät auf einer Seite der landwirtschaftlichen Arbeitsmaschine weiter nach außen als auf der anderen Seite, so kann die Leitlinie 102 in dem Leitstreifen 103 entsprechend verschoben sein.

Selbst wenn die Steuereinheit über Daten verfügt, die die Feldkontur 101 charakterisieren und auf bestimmte technische Daten der landwirtschaftlichen Arbeitsmaschine zugreifen kann, um die Leitlinie 102 zu erstellen, kann es aufgrund von geografischen Besonderheiten, die der Steuereinheit nicht bekannt sind, nötig sein, die Leitlinie 102 zu modifizieren bzw. zu aktualisieren.

Dazu kann vorgesehen sein, dass der Benutzer zusätzliche Informationen eingibt, die beispielsweise charakteristisch für bestimmte Hindernisse auf dem Feld sind. In Abhängigkeit dieser Hindernisse 420 kann dann, wie in Fig. 4b dargestellt, die Leitlinie 102 so verschoben werden, dass sie gemäß der Leitlinie 102' um das Hindernis herumführt. Es ist alternativ auch möglich, dass der Fahrer der landwirtschaftlichen Arbeitsmaschine beim ersten Arbeitsbeginn zunächst der Leitlinie 102, wie sie von der Steuereinheit entsprechend dem erfindungsgemäßen Verfahren erzeugt wurde und auf der Anzeigeeinrichtung ausgegeben wurde, folgt und eventuell auftretende Hindernisse umfährt.

Es kann dann vorgesehen sein, dass die Steuereinheit entweder automatisch oder in Antwort auf eine Eingabe des Benutzers die tatsächlich gefahrene Strecke als modifizierte Leitlinie 102' verwendet. So kann eine gegebenenfalls umständliche Eingabe von bestimmten Hindernissen umgangen werden und eine aktualisierte Leitlinie 102' basierend auf der tatsächlichen Bewegung der landwirtschaftlichen Arbeitsmaschine erstellt werden.

Dabei kann auch vorgesehen sein, dass die Modifizierung der Leitlinie basierend auf der tatsächlichen Bewegung der landwirtschaftlichen Arbeitsmaschine nur bei Überschreiten einer gewissen Toleranzgrenze automatisch erfolgt. Bewegt sich die landwirtschaftliche Arbeitsmaschine beispielsweise in einem Streifen entlang der Leitlinie, der links und rechts der Leitlinie einen halben Meter oder einen Meter breit ist, so kann die Steuereinheit so ausgebildet sein, dass sie diese Abweichung ignoriert. Entfernt sich die landwirtschaftliche Arbeitsmaschine aus diesem Streifen und bewegt sich beispielsweise in einem Abstand von mehr als einem Meter oder mehr als zwei Meter von der eigentlichen Leitlinie 102, wie sie in Fig. 4a dargestellt ist, so kann die Steuereinheit diese Abweichung berücksichtigen und den Bewegungsverlauf der landwirtschaftlichen Arbeitsmaschine, den sie beispielsweise durch ständige Positionsmessung eines GPS-Sensors bestimmt, nutzen, um die Leitlinie 102, wie sie in Fig. 4a dargestellt ist, zu modifizieren und so zur Leitlinie 102' zu gelangen, wie sie in Fig. 4b dargestellt ist, um das eventuell vorhandene Hindernis 420 zu umfahren. Bei dieser Ausführungsform ist es nicht notwendig, dass die Steuereinheit Informationen über den Grund der Abweichung von der Leitlinie 102 mitgeteilt bekommt. Es ist einem Fahrer so also möglich, die automatisch erstellten Leitlinien, wie sie in Fig. 1 und Fig. 2 dargestellt wurden, individuell anzupassen.

Grundsätzlich kann die Steuereinheit beim Anlegen der Leitlinien auch mehr als einen Parameter berücksichtigen. Um von vorneherein eine möglichst zuverlässige Erstellung der Leitlinien zu ermöglichen, ist es daher vorteilhaft, wenn die Steuereinheit so viele Informationen berücksichtigt wie möglich. So kann die Erstellung der Leitlinien nicht nur von der Feldkontur und der Arbeitsbreite des Arbeitsgeräts abhängen sondern auch unter ökonomischen Gesichtspunkten erfolgen, um z.B. die zurückgelegte Strecke auf dem Feld zu minimieren. Ebenso können von vorneherein zusätzliche geografische Informationen über Hindernisse, wie sie in Fig. 4b dargestellt sind, berücksichtigt werden, um die Leitlinien zu ermitteln.

Weiterhin ist es vorteilhaft, wenn für das Erstellen einer weiteren Leitlinie, beispielsweise der Leitlinie 212, wie sie in Fig. 2 dargestellt ist, der Verlauf der Leitlinien 102 und 211 aus Fig. 2 berücksichtigt werden. So können sämtliche Leitlinien nicht nur basierend auf den zur Verfügung stehenden Informationen sondern auch basierend auf den vorhergehenden Leitlinien erstellt werden, um sicherzustellen, dass es nur wenige oder keine Bereiche gibt, in denen ein bereits bearbeiteter Bereich des Feldes nochmals bearbeitet wird. Hierzu ist es besonders vorteilhaft, wenn die einzelnen Leitlinien möglichst parallel zueinander verlaufen. Bevorzugt ist, wenn die inneren Leitlinien 211-213, wie sie in Fig. 2 dargestellt sind, vollständig parallel zueinander verlaufen, sofern hier kein Hindernis auftritt, was umfahren werden muss und die Leitlinien 211-213 nur näherungsweise parallel zur Leitlinie 102 verlaufen, die ihrerseits parallel zur Feldkontur verläuft. Die Leitlinie 102 kann so als Wendebereich genutzt werden, in dem die landwirtschaftliche Arbeitsmaschine beim Wenden von einer Leitlinie, beispielsweise der Leitlinie 211, auf die Leitlinie 212 entlangfährt. Die Leitlinie 102 kann dann von der Arbeitsmaschine am Ende des landwirtschaftlichen Arbeitszyklus bearbeitet werden. Dazu kann die Steuereinheit die Anzeigeeinrichtung auch so steuern, dass nicht nur die einzelnen Leitlinien sondern auch bestimmte Wendebereiche, in denen die landwirtschaftliche Arbeitsmaschine vorzugsweise gewendet werden sollte, angezeigt werden. Um die Effektivität des landwirtschaftlichen Arbeitszyklus weiter zu erhöhen, kann diese Anzeige auch vorsehen, dass eine entsprechende Durchlaufrichtung der Leitlinien 211-215, wie sie in Fig. 3 dargestellt sind, angegeben wird, beispielsweise mit Hilfe von Pfeilen.

## Patentansprüche

1. Verfahren zur Unterstützung der Positionierung einer landwirtschaftlichen Arbeitsmaschine auf einem Feld (100), **dadurch gekennzeichnet, dass** basierend auf einer vorgegebenen Feldrandkontur (101) eine zu der Feldrandkontur im Wesentlichen parallele, Leitlinie (102) basierend auf wenigstens einem Parameter, z.B. der Arbeitsbreite der Arbeitsmaschine, erstellt wird.

2. Verfahren nach Anspruch 1, **dadurch gekennzeichnet, dass** der Parameter auf einer Arbeitsbreite eines Arbeitsgeräts der landwirtschaftlichen Arbeitsmaschine basiert und/oder der halben Arbeitsbreite des Arbeitsgeräts entspricht.

3. Verfahren nach Anspruch 1 oder 2, **dadurch gekennzeichnet, dass** die Feldrandkontur (101) manuell vorgegeben wird und/oder durch einmaliges Umfahren des Feldes und/oder basierend auf GPS-Daten erstellt wird.

4. Verfahren nach einem der Ansprüche 1 bis 3, **dadurch gekennzeichnet, dass** weitere Leitlinien (211, 212, 213) automatisch, basierend auf der Leitlinie (102) erstellt werden, wobei die weiteren Leitlinien (211, 212, 213) zumindest teilweise parallel zur Leitlinie (102) verlaufen.

5. Verfahren nach einem der Ansprüche 1 bis 4, **dadurch gekennzeichnet, dass** die Leitlinie (102) basierend auf der Bewegung der landwirtschaftlichen Arbeitsmaschine entlang der Leitlinie (102) aktualisiert wird.

6. Verfahren nach einem der Ansprüche 1 bis 5, **dadurch gekennzeichnet, dass** die Leitlinie (102) basierend auf für das Feld (100) charakteristischen geographischen Informationen erstellt wird.

7. Verfahren nach Anspruch 4, **dadurch gekennzeichnet, dass** die weiteren Leitlinien (211, 212, 213) basierend auf für das Feld (100) charakteristischen geographischen Informationen basierend aufeinander und basierend auf der Leitlinie (102) erstellt werden.

8. Verfahren nach einem der Ansprüche 1 bis 7, **dadurch gekennzeichnet, dass** basierend auf der Leitlinie (102) und der aktuellen Position der Arbeitsmaschine eine Fahrhilfe in einer Ausgabeeinrichtung (350) angezeigt wird oder basierend auf der Leitlinie (102) eine automatische Lenkung der Arbeitsmaschine durchgeführt wird.

9. Steuereinheit für eine landwirtschaftliche Arbeitsmaschine, **dadurch gekennzeichnet, dass** die Steuereinheit ausgebildet ist, basierend auf einer vorgegebenen Feldrandkontur (101) eine zu der Feldrandkontur (101) im Wesentlichen parallele Leitlinie (102), basierend auf wenigstens einem Parameter, z.B. der Arbeitsbreite der Arbeitsmaschine, zu erstellen.

10. Steuereinheit nach Anspruch 9, **dadurch gekennzeichnet, dass** der Parameter auf der Arbeitsbreite eines Arbeitsgeräts der landwirtschaftlichen Arbeitsmaschine basiert und/oder der halben Arbeitsbreite des Arbeitsgeräts entspricht.

11. Steuereinheit nach Anspruch 9 oder 10, **dadurch gekennzeichnet, dass** der Steuereinheit die Feldkontur (101) manuell vorgegeben werden kann oder basierend auf gespeicherten GPS-Daten erstellt werden kann.

12. Steuereinheit nach einem der Ansprüche 9 bis 11, **dadurch gekennzeichnet, dass** die Steuereinheit weitere Leitlinien (211, 212, 213) automatisch, basierend auf der Leitlinie (102) erstellen kann, wobei die weiteren Leitlinien (211, 212, 213) zumindest teilweise parallel zur Leitlinie (102) verlaufen.

13. Steuereinheit nach einem der Ansprüche 9 bis 12, **dadurch gekennzeichnet, dass** die Steuereinheit die Leitlinie (102) basierend auf gespeicherten geographischen Informationen, die charakteristisch für das Feld (100) sind, erstellen kann.

14. Steuereinheit nach einem der Ansprüche 9 bis 13, **dadurch gekennzeichnet, dass** die Steuereinheit die Leitlinie (102) basierend auf von einem Positionssensor aufgenommenen Positionsdaten der landwirtschaftlichen Arbeitsmaschine bei einer Bewegung entlang der Leitlinie (102) aktualisieren kann.

15. Steuereinheit nach einem der Ansprüche 9 bis 14, **dadurch gekennzeichnet, dass** der eine Parameter von der Steuereinheit basierend auf gespeicherten Daten vorgegeben werden kann und/oder der Parameter manuell eingegeben werden kann.
